# FASCICULE DE BREVET EUROPEEN

(11) **EP 3 381 430 B1**
(45) Date de publication et mention de la délivrance du brevet: **06.05.2026**
(21) Numéro de dépôt: 18165152.2
(22) Date de dépôt: 29.03.2018
(51) Int. Cl.: A61J 1/16, B65D 21/02, B65D 77/06

(54) **BOITIER DE PROTECTION D'UNE POCHE DE LIQUIDE BIOPHARMACEUTIQUE, ENSEMBLE DE PROTECTION ET PROCEDE D'ASSEMBLAGE ASSOCIES**
SCHUTZGEHÄUSE EINES BEUTELS MIT BIOPHARMAZEUTISCHER FLÜSSIGKEIT, ENTSPRECHENDE SCHUTZANORDNUNG UND ENTSPRECHENDES ZUSAMMENBAUVERFAHREN
HOUSING FOR PROTECTING A BAG OF BIOPHARMACEUTICAL LIQUID, ASSOCIATED PROTECTIVE ASSEMBLY AND ASSEMBLY METHOD

(30) Priorité: 30.03.2017 FR 1770320
(43) Date de publication de la demande: 03.10.2018
(73) Titulaire: Sartorius Stedim FMT, 13400 Aubagne (FR)
(72) Inventeur: BAUD, Stéphane, 13720 La Bouilladisse (FR); BAZIN, Frédéric, 13260 CASSIS (FR)
(74) Mandataire: Novagraaf International SA

(56) Documents cités:
- WO-A2-2005/040034
- US-A- 4 545 486
- US-A- 4 771 917
- US-A1- 2005 183 976
- US-A1- 2010 140 124

## Description

### DOMAINE DE L'INVENTION

L'invention concerne le domaine des boîtiers de protection de poche de liquide biopharmaceutique, le domaine des ensembles de protection intégrant un boîtier de protection et une poche de liquide biopharmaceutique, ainsi que le domaine des procédés d'assemblage d'un ensemble de protection intégrant un boîtier de protection et une poche de liquide biopharmaceutique.

### CONTEXTE DE L'INVENTION

Selon un premier art antérieur, il est connu un boîtier de protection de poches de liquide biopharmaceutique comprenant d'une part deux coques supérieure et inférieure assemblées l'une sur l'autre, ainsi que deux films plastiques élastiques situés à l'intérieur de ces coques et venant enserrer deux poches de liquide biopharmaceutique. Les poches de liquide biopharmaceutique sont maintenues en place entre les films et protégées des agressions et chocs extérieurs au boîtier de protection par les espaces respectivement maintenus entre d'une part la coque supérieure et le film supérieur et d'autre part entre la coque inférieure et le film inférieur. Ce boîtier de protection assure un bon maintien des poches de liquide biopharmaceutique à l'intérieur. En revanche, ce boîtier de protection présente des coques de structure complexe et délicate, à cause du film plastique élastique à fixer sur chacune des coques, et présente un encombrement important en hauteur à cause des deux espaces vides empilés l'un sur l'autre, celui entre film supérieur et coque supérieure et celui entre film inférieur et coque inférieure.

Selon un deuxième art antérieur, par exemple présenté dans la demande de brevet EP1993921, il est connu un boîtier de protection de poches de liquide biopharmaceutique comprenant d'une part deux coques supérieure et inférieure assemblées l'une sur l'autre, et venant enserrer une poche de liquide biopharmaceutique. Ce boîtier de protection présente d'une part l'inconvénient soit d'une insuffisance de maintien latéral de la poche de liquide biopharmaceutique (cas où la poche est plus petite que l'espace disponible inter-coques) soit d'une pression trop importante exercée par les coques directement sur la poche de liquide biopharmaceutique (cas où la poche est juste dimensionnée pour l'espace disponible inter-coques), à cause de la constitution du logement de la poche par la coopération des deux coques entre elles (chaque coque ne définissant qu'une partie du logement), et d'autre part l'inconvénient d'un montage délicat nécessitant la superposition exacte et précise des deux coques par la coopération d'un jeu de pions et d'alésage.

US 2010/140124 divulgue un boitier de protection d'une poche de liquide biopharmaceutique, comprenant une coque inférieure, une coque supérieure qui est insérable dans la coque inférieure et qui comprend un logement et des parois latérales, de sorte qu' entre le logement et les parois latérales se trouve un espace annulaire de rangement.

### RESUME DE L'INVENTION

Le but de la présente invention est de fournir un boîtier de protection de poche de liquide biopharmaceutique, et/ou un ensemble de protection d'une poche de liquide biopharmaceutique, et/ou un procédé d'assemblage d'un ensemble de protection d'une poche de liquide biopharmaceutique, palliant au moins partiellement les inconvénients précités.

Plus particulièrement, l'invention vise à fournir un boîtier de protection de poche de liquide biopharmaceutique qui améliore le maintien latéral de la poche, cette poche étant maintenue dans un logement d'une coque supérieure elle-même maintenue entre les parois d'une coque inférieure dans laquelle elle est insérée, sans exercer de contrainte excessive sur la poche de liquide biopharmaceutique, et tout en facilitant l'assemblage du boîtier de protection, la simple insertion d'une coque supérieure dans une coque inférieure, la coque supérieure définissant la quasi-totalité du logement à elle seule (le débattement latéral dans le logement étant entièrement limité par la seule coque supérieure), aboutissant ainsi à un bon compromis entre d'une part l'efficacité de maintien de la poche (sans risquer d'abîmer cette poche) et d'autre part la facilité d'assemblage du boîtier de protection.

Selon l'invention, il est prévu un boitier de protection d'une poche de liquide biopharmaceutique, selon la revendication 1, comprenant : une coque inférieure comprenant un fond et des parois latérales, une coque supérieure : qui comprend un logement destiné à recevoir la poche, et qui est insérable dans la coque inférieure, de sorte que l'ouverture du logement soit au voisinage et en regard du fond de la coque inférieure, et de sorte que la coque supérieure soit maintenue en place latéralement entre les parois latérales de la coque inférieure.

Selon ce premier objet de l'invention, une poche pleine de liquide biopharmaceutique étant placé dans le boîtier de protection, il est aussi prévu un ensemble de protection d'une poche de liquide biopharmaceutique comprenant : un boitier de protection selon l'invention, une poche de liquide biopharmaceutique placée dans ledit boîtier de protection.

Selon ce premier objet de l'invention, une poche vide de liquide biopharmaceutique étant placé dans le boîtier de protection, il est également prévu un ensemble de protection d'une poche destinée à recevoir un liquide biopharmaceutique comprenant : un boitier de protection selon l'invention, une poche vide destinée à recevoir du liquide biopharmaceutique placée dans ledit boîtier de protection.

Selon ce premier objet de l'invention, une poche pleine de liquide biopharmaceutique étant placé dans le boîtier de protection, il est encore prévu un ensemble de protection d'une poche de liquide biopharmaceutique comprenant: une poche de liquide biopharmaceutique, un boitier de protection comprenant : une coque inférieure comprenant un fond et des parois latérales, une coque supérieure : qui comprend un logement recevant la poche, et qui est inséré dans la coque inférieure, de sorte que l'ouverture du logement est au voisinage et en regard du fond de la coque inférieure, et de sorte que la coque supérieure est maintenue en place latéralement entre les parois latérales de la coque inférieure. Latéralement signifie dans tout le plan moyen du fond de la coque inférieure, c'est-à-dire aussi bien longitudinalement que latéralement « stricto sensu » c'est-à-dire « de côté » : ceci est vrai pour tout le texte de la demande de brevet, sauf mention contraire.

Selon l'invention, pour réaliser facilement l'assemblage du boîtier de protection, même avec la poche vide à l'intérieur de ce boîtier de protection, il est de plus prévu un procédé d'assemblage d'un ensemble de protection d'une poche de liquide biopharmaceutique selon l'invention, caractérisé en ce que : un opérateur accroche, par une première de ses mains, la poche par sa poignée à la coque supérieure, cette coque supérieure étant en position verticale, cette coque supérieure restant en position verticale, cet opérateur positionne et maintient, par une deuxième de ses mains, l'extrémité de la poche opposée à sa poignée contre la coque supérieure de manière à ce que la poche soit dans son logement de coque supérieure, cet opérateur place la coque supérieure contenant la poche dans la coque inférieure placée en position horizontale.

Selon un deuxième objet de l'invention, afin d'améliorer le maintien de la poche en réduisant son débattement longitudinal dans le logement de la coque supérieure et afin de pouvoir réduire voire supprimer l'effet « accordéon » en immobilisant la poche aux deux extrémités longitudinales du logement en l'immobilisant, en l'attachant ou en la bloquant aux deux extrémités longitudinales de la coque supérieure, il est prévu un ensemble de protection d'une poche de liquide biopharmaceutique comprenant : une poche de liquide biopharmaceutique, un boitier de protection comprenant : une coque inférieure comprenant un fond et des parois latérales, une coque supérieure : qui comprend un logement recevant la poche et qui présente deux extrémités longitudinales, et qui est inséré dans la coque inférieure, de sorte que l'ouverture du logement est en regard du fond de la coque inférieure, et de sorte que la poche est maintenue en place en étant immobilisée aux deux extrémités longitudinales de la coque supérieure sans toucher ni le fond ni les parois latérales de la coque inférieure.

De préférence, la distance entre l'ouverture du logement et le fond de la coque inférieure est au moins 3 fois inférieure à la profondeur du logement, de préférence au moins 6 fois inférieure à la profondeur du logement, encore plus de préférence au moins 10 fois inférieure à la profondeur du logement. Ainsi, la coque supérieure étant plus proche du fond de la coque inférieure, le débattement latéral de la poche, c'est-à-dire le débattement de la poche dans un plan parallèle au plan moyen du fond de la coque inférieure, est plus limité, et de cette manière le maintien de la poche est amélioré.

De préférence, la coque supérieure est insérable dans la coque inférieure aussi de sorte que l'ouverture du logement soit en contact avec le fond de la coque inférieure. Ainsi, la coque supérieure étant au contact du fond de la coque inférieure, le débattement latéral de la poche, c'est-à-dire le débattement de la poche dans un plan parallèle au plan moyen du fond de la coque inférieure, est encore plus limité, et de cette manière le maintien de la poche est encore amélioré.

Le logement comprend un fond, et des parois latérales s'étendant sensiblement perpendiculairement audit fond. Cette extension des parois latérales de la coque supérieure perpendiculairement au fond de la coque supérieure permet au logement de mieux réduire le débattement latéral de la poche, c'est-à-dire le débattement de la poche justement entre les parois de la coque supérieure. De cette manière, la poche est encore mieux maintenue latéralement.

De préférence, la coque supérieure est insérable dans la coque inférieure aussi de sorte qu'un pourtour extérieur de la coque supérieure soit guidé par les parois latérales de la coque inférieure. De cette manière, l'assemblage du boîtier de protection est rendu encore plus facile.

La coque supérieure présente également des parois latérales externes entourant les parois latérales du logement et s'étendant sensiblement parallèlement aux parois latérales du logement. De cette manière, l'assemblage du boîtier de protection est rendu encore plus facile.

De préférence, l'épaisseur de la coque supérieure est inférieure à l'épaisseur de la coque inférieure. De cette manière, l'empilement des boîtiers de protection les uns sur les autres sera facilité.

De préférence, la coque supérieure est insérable dans la coque inférieure aussi de sorte à ne pas dépasser hors de la coque inférieure en hauteur. De cette manière, l'empilement des boîtiers de protection les uns sur les autres est rendu encore plus facile, car cela évite d'exercer un effort vertical ou de transmettre une contrainte verticale directement sur la poche, même lorsque les boîtiers de protection s'empilent les uns sur les autres sur plusieurs étages.

De préférence, la coque supérieure est entièrement insérable dans la coque inférieure. De cette manière, la coque supérieure qui entoure presqu'entièrement la poche, ne subira pas directement les chocs venus de l'extérieur du boîtier de protection, mais sera elle-même protégée par la coque inférieure. La protection de la poche contre les agressions mécaniques et les chocs venant de l'extérieur du boîtier de protection est ainsi améliorée. Cette protection contre les chocs est alors efficace non seulement contre les chocs verticaux mais aussi alors contre les chocs horizontaux.

De préférence, au moins lorsque la coque supérieure est insérée dans la coque inférieure, des chicanes sont disposées autour du logement de manière à pouvoir maintenir en place autour du logement au moins un tube issu de la poche. De cette manière, le tube ou les tubes peuvent être rangés également dans le boîtier de protection en étant bien maintenus en place. Ce bon maintien en place des tubes permet également une tension suffisante sur les connecteurs de tubes situés à une extrémité de la poche améliorant encore alors le maintien de la poche par rapport à la coque supérieure qui la protège.

De préférence, même lorsque la coque supérieure n'est pas insérée dans la coque inférieure, des chicanes sont disposées autour du logement de manière à pouvoir maintenir en place autour du logement au moins un tube issu de la poche. De cette manière, le tube ou les tubes peuvent être rangés et maintenus en place tout de suite dès l'introduction de la poche dans la coque supérieure, sans avoir besoin d'attendre que la coque supérieure soit insérée dans la coque inférieure.

De préférence, la coque supérieure comprend également, au moins au niveau d'une extrémité du logement destinée à recevoir le fond de la poche, un rebord entourant l'ouverture du logement, s'étendant préférentiellement sensiblement dans le plan de l'ouverture du logement.

La coque supérieure comprend une attache qui est située hors du logement et qui est disposée de manière à ce que la poignée du fond de la poche puisse s'accrocher à l'attache.

De cette manière, le débattement longitudinal de la poche dans le logement de la coque supérieur est encore réduit, ce qui améliore de ce fait le maintien latéral de la poche, c'est-à-dire le maintien de la poche entre les parois du logement de cette coque supérieure.

De préférence, la partie de rebord de coque supérieure, située entre l'attache et ladite extrémité du logement, est disposée de manière à ce que, lorsque la poignée du fond de la poche s'accroche à l'attache, la liaison entre poignée et fond de poche s'enroule autour de ladite partie de rebord. Le fond de poche est près du fond du logement, la poignée est accrochée sur l'attache, et la liaison qui relie fond de poche d'une part et poignée d'autre part fait le tour du rebord en suivant la forme de ce rebord. De cette manière, le maintien de la poche est encore amélioré grâce à la réduction supplémentaire de son débattement longitudinal dans le logement de la coque supérieure. Ainsi, l'effet « accordéon », dû à la partie intermédiaire entre le trou de la poignée et le fond de la poche, qui sinon aurait pu se replier en accordéon sur lui-même, est réduit voire même supprimé.

L' attache est formée par une ou plusieurs encoches formées dans une paroi latérale de la coque supérieure. C'est une façon particulièrement simple et efficace de réaliser cette attache. Ces encoches dans la paroi, outre la simplicité de fabrication qui est leur associée, permettent aussi, grâce à leur nombre, l'adaptation à différentes largeurs de poignée pour différents types de poche.

De préférence, le logement est plus court que la coque supérieure de manière à dégager un espace libre permettant la sortie du ou des tubes de la poche. De cette manière, la zone du ou des connecteurs entre le ou les tubes d'une part et la poche d'autre part est mieux protégée.

De préférence, la paroi latérale de la coque inférieure située du côté de la sortie de tube(s) de la poche comprend une ouverture de sortie du ou des tubes latéralement hors de la coque inférieure. Cela permet l'accès au(x) tube(s), même lorsque la poche est insérée dans le boîtier de protection, permettant ainsi une utilisation pleinement opérationnelle de cette poche, même à l'intérieur de son boîtier de protection.

De préférence, ladite paroi latérale de la coque inférieure comprend un renfoncement disposé vers l'intérieur de la coque inférieure et situé au-dessus ou en dessous de ladite ouverture de sortie. Cela, permet l'accès au(x) tube(s), même lorsque la poche est insérée dans le boîtier de protection et que les boîtiers de protection sont de surcroît empilés les uns sur les autres, ce renfoncement dégageant alors un espace de sortie permettant aux tubes de s'échapper par le haut, ou par le bas, et non pas uniquement horizontalement ce qui les aurait rendus plus sensibles aux chocs et à leur transmission directe vers la poche.

De préférence, le boîtier de protection comprend également un couvercle externe recouvrant la coque supérieure et fermant la coque inférieure. Cela évite d'exercer un effort vertical ou latéral trop direct sur la coque supérieure, ce qui protège mieux la poche.

De préférence, la coque inférieure et la coque supérieure sont solidarisables entre elles de manière à être ultérieurement détachables l'une de l'autre, et de préférence la coque inférieure comprend également des trous dans une ou plusieurs de ses parois latérales disposés de manière à ce que la coque supérieure puisse être fixée à la coque inférieure par des rivets. Le boîtier de protection est alors mieux fermé tout en restant souple d'utilisation.

De préférence, la coque inférieure et la coque supérieure sont solidarisables entre elles de manière à être ultérieurement non détachables l'une de l'autre sans endommagement, et de préférence la coque inférieure comprend également des trous dans une ou plusieurs de ses parois latérales disposés de manière à ce que la coque supérieure puisse être fixée à la coque inférieure par des rivets. Le boîtier de protection est alors mieux fermé et il devient même inviolable, c'est-à-dire que la poche ne peut pas être extraite du boîtier de protection sans endommagement, bien sûr visible, de ce même boîtier de protection.

De préférence, la coque supérieure et la coque inférieure sont en plastique. Le plastique offre une meilleure biocompatibilité et facilite la stérilisation de la poche et de son contenu. Par ailleurs, le plastique étant moins résistant que le métal, la structure du boîtier de protection selon l'invention devient d'autant plus intéressante qu'elle redistribue mieux les efforts de contrainte, en particulier lors de l'empilement de plusieurs boîtiers de protection les uns sur les autres.

De préférence, le plastique est du polyethylene téréphthalate glycol (PETG). Ce matériau PETG présente, en plus de bien supporter l'irradiation gamma et la congélation, l'avantage d'être transparent, ce qui permet à l'utilisateur remplissant la poche de liquide biopharmaceutique, lorsque celle-ci se trouve vide mais déjà dans le boîtier de protection fermé, de bien pouvoir observer le remplissage et d'en garantir un bon déroulement.

D'autres exemples de plastique pouvant être utilisés pour la coque inférieure et/ou la coque supérieure et/ou le couvercle externe, des plastiques identiques ou différents pouvant même être utilisés pour les différents éléments constituant le boîtier de protection, sont par exemple :
➢ le Polyéthylène Téréphtalate Glycol (PETG) et ses dérivés PET et APET,
➢ le Polyméthacrylate : PMMA,
➢ le Polyéthylène PE ou le Polyéthylène Haute Densité PEhd,
➢ l'Acryloitrile Butadiène Styrène : ABS,
➢ la résine acrylyque coextrudée sur l'ABS : ABS/PMMA,
➢ le Polycarbonate : PC,
➢ l'Acryloitrile Butadiène Styrène/Polycarbonate : ABS/PC - (bi-matière),
➢ le Polychlorure de Vynile : PVC ou KYDEX,
➢ le PolyPropylène : PP,
➢ le Polystyrène : PS,
➢ le Polystyrène/Polyéthylène : PS/PE - (bi-matière),
➢ le Polyamide : PA.

De préférence, la coque supérieure et la coque inférieure sont réalisées dans un même matériau commun, et de préférence en ce que le couvercle externe recouvrant la coque supérieure et fermant la coque inférieure, lorsqu'il y en a un, est également réalisé dans ce même matériau commun. Le fait que, au moins les deux coques, inférieure et supérieure, et avantageusement également le couvercle externe, soient tous réalisés dans un seul et même matériau commun, non seulement rend plus simple la fabrication du boîtier de protection, mais surtout rend toutes les opérations de validation et de compatibilité biopharmaceutique plus simples. Ce même matériau commun peut être un matériau simple ou un matériau composite comme par exemple une bi-matière.

De préférence, le boîtier de protection est gerbable. De cette manière, l'empilement des boîtiers de protection les uns sur les autres est facilité, tout en évitant encore plus la transmission directe de contrainte verticale sur la poche.

De préférence, lorsque les deux boîtiers sont gerbés l'un dans l'autre, le fond de la coque inférieure du boîtier au-dessus vient en appui soit sur le couvercle du boîtier en-dessous soit sur la coque supérieure du boîtier en-dessous. Cela permet une meilleure répartition des efforts sur l'ensemble du plan de la coque supérieure convexe plutôt que sur les seules parois de la coque inférieure concave, évitant ainsi la création d'une zone de fragilité au niveau de la coque inférieure concave. La robustesse du boîtier de protection est ainsi moins sollicitée lors de l'empilement de ces boîtiers de protection les uns sur les autres.

De préférence, les parois latérales de la coque inférieure comprennent un ou plusieurs épaulements, de préférence parallèle au plan moyen du fond de la coque inférieure, sur lesquels le couvercle vient en appui. Cela aide à mieux répartir les efforts sur l'ensemble du couvercle et sur l'ensemble de la coque inférieure, et par conséquent sur l'ensemble du boîtier de protection.

De préférence, les parois latérales de la coque inférieure comprennent un ou plusieurs épaulements, de préférence parallèle au plan moyen du fond de la coque inférieure, sur lesquels la coque supérieure vient en appui. Cela aide à mieux répartir les efforts sur l'ensemble de la coque supérieure et sur l'ensemble de la coque inférieure, et par conséquent sur l'ensemble du boîtier de protection.

De préférence, les parois latérales de la coque inférieure comprennent un ou plusieurs épaulements, de préférence orthogonaux au plan moyen du fond de la coque inférieure, contre lesquels la coque supérieure vient en butée longitudinale lorsqu'elle est insérée dans la coque inférieure. Cela aide le maintien de la coque supérieure entre les parois de la coque inférieure, cela contribue donc à l'amélioration du maintien de la poche dans le boîtier de protection, puisque la poche est elle-même dans le logement de la coque supérieure.

De préférence, la coque supérieure comprend une ou plusieurs attaches longitudinale(s) de poche, et la coque supérieure ne comprend aucune autre attache latérale de poche. Le seul maintien longitudinal de la poche suffit à maintenir correctement la poche entre les parois de la coque inférieure, en simplifiant la structure et la disposition des éléments de maintien de cette poche. Ainsi, le maintien de la poche est amélioré, tout en simplifiant la structure de la coque supérieure et de la poche. Par ailleurs, le procédé d'assemblage de la poche dans son boîtier de protection va être rendu ainsi plus court et plus facile, c'est-à-dire plus ergonomique.

De préférence, la coque supérieure comprend une ou plusieurs chicanes formées dans une paroi latérale de la coque supérieure opposée à la paroi latérale de l'attache et destinées à guider un ou plusieurs tubes. Cela permet le maintien du ou des tube(s), lorsque la poche est insérée dans le boîtier de protection. Préférentiellement, la coque supérieure comprend une ou plusieurs chicanes formées dans chacune des deux paroi latérales de la coque supérieure reliant d'une part la paroi latérale de l'attache à d'autre part la paroi latérale opposée à la paroi latérale de l'attache, ces chicanes étant destinées à guider un ou plusieurs tubes.

De préférence, dans une alternative, lorsque la coque supérieure est assez espacée du fond de la coque inférieure, afin de réduire la profondeur des chicanes et de faciliter l'installation des tubes autour du logement, la distance entre l'ouverture du logement et le fond de la coque inférieure est supérieure ou égale à la moitié, de préférence aux trois quarts, de la profondeur du logement, et en ce que, au moins lorsque la coque supérieure est insérée dans la coque inférieure, des chicanes sont disposées autour du logement de manière à pouvoir maintenir en place autour du logement au moins un tube issu de la poche.

De préférence, la poche est fixée longitudinalement dans le boitier de protection, et la poche n'est pas fixée ailleurs que longitudinalement dans le boitier de protection. Le maintien de la poche reste bon, tout en simplifiant le système de fixation. Ainsi, le maintien de la poche est amélioré, tout en simplifiant la structure de la coque supérieure et de la poche. De plus, le procédé d'assemblage est également facilité.

De préférence, la poche de liquide biopharmaceutique est plate et allongée et présente au niveau de son fond de poche une poignée reliée audit fond par une liaison de forme plane, et au niveau du côté opposé une ou plusieurs connexions pour tube.

De préférence, la poche n'est pas fixée ailleurs que longitudinalement dans la coque supérieure. Le maintien de la poche reste bon, tout en simplifiant le système de fixation. Ainsi, le maintien de la poche est amélioré, tout en simplifiant la structure de la coque supérieure et de la poche. De cette manière, la réduction du débattement longitudinal de la poche dans le logement de la coque supérieure est réalisée uniquement par deux fixations longitudinales, ce qui améliore le compromis entre efficacité de maintien et simplicité de structure comme d'assemblage.

De préférence, la poche présente au niveau de son fond de poche une poignée et au niveau du côté opposé à son fond de poche une ou plusieurs connexions pour tube.

De préférence, la poche est attachée au niveau d'une extrémité longitudinale de la coque supérieure par sa poignée, et la poche est immobilisée au niveau de l'autre extrémité longitudinale de la coque supérieure par la simple tension longitudinale exercée par le ou les tube(s) sur la poche. Cette simple tension longitudinale exercée par le ou les tube(s) sur la poche est obtenue par le blocage du ou des tubes au niveau de cette extrémité longitudinale de la poche, par exemple en coinçant le ou les tubes dans une chicane de la paroi latérale avant de la coque supérieure. Cela améliore encore plus le maintien de la poche, tout en réduisant son débattement longitudinal dans le logement par une simple attache d'un côté longitudinal coopérant avec une simple tension de l'autre côté longitudinal.

Préférentiellement, la poche est une poche souple. La poche est avantageusement souple pour se déformer sous l'effet du liquide qu'elle contient. La poche est avantageusement souple pour se déformer sous l'effet d'une solution présentant une densité voisine de celle de l'eau. La poche souple est avantageusement une poche à usage unique, c'est-à-dire une poche jetable après un seul usage. D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement une vue en éclaté d'un exemple de boîtier de protection sans poche selon un mode de réalisation de l'invention.
La figure 1A représente schématiquement une coupe AA de la coque supérieure représentée sur la figure 1.
La figure 2 représente schématiquement une vue assemblée en perspective d'un exemple de boîtier de protection intégrant une poche selon un mode de réalisation de l'invention.
La figure 3 représente schématiquement une vue assemblée de dessus d'un exemple de boîtier de protection intégrant une poche selon un mode de réalisation de l'invention.
La figure 4 représente schématiquement une vue de détail en perspective d'un exemple d'attache de la coque supérieure de boîtier de protection coopérant avec la poignée d'une poche selon un mode de réalisation de l'invention.
La figure 5A représente schématiquement une vue partielle en perspective d'un exemple d'extrémité longitudinale de la coque supérieure de boîtier de protection selon un mode de réalisation de l'invention.
La figure 5B représente schématiquement une vue partielle en perspective d'un exemple alternatif d'extrémité longitudinale de la coque supérieure de boîtier de protection selon un mode de réalisation de l'invention.
La figure 6 représente schématiquement une vue de détail de dessus d'un exemple de chicanes de la coque supérieure de boîtier de protection selon un mode de réalisation de l'invention.
Les figures 7A, 7B, 7C et 7D, représentent schématiquement en vue de dessus quatre étapes successives d'un exemple de procédé d'assemblage d'un ensemble de protection d'une poche selon un mode de réalisation de l'invention.
Les figures 8A et 8B représentent schématiquement en perspective des exemples d'empilement les uns sur les autres de plusieurs boîtiers de protection intégrant des poches selon un mode de réalisation de l'invention.
La figure 8C représente schématiquement en perspective un exemple de groupe de plusieurs boîtiers de protection intégrant des poches selon un mode de réalisation de l'invention.

### DESCRIPTION DETAILLEE DE L'INVENTION

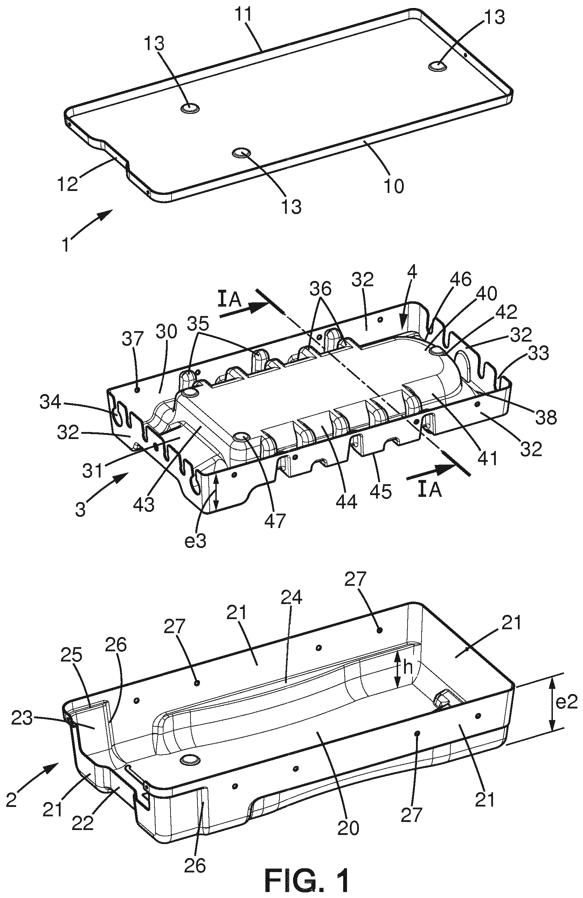

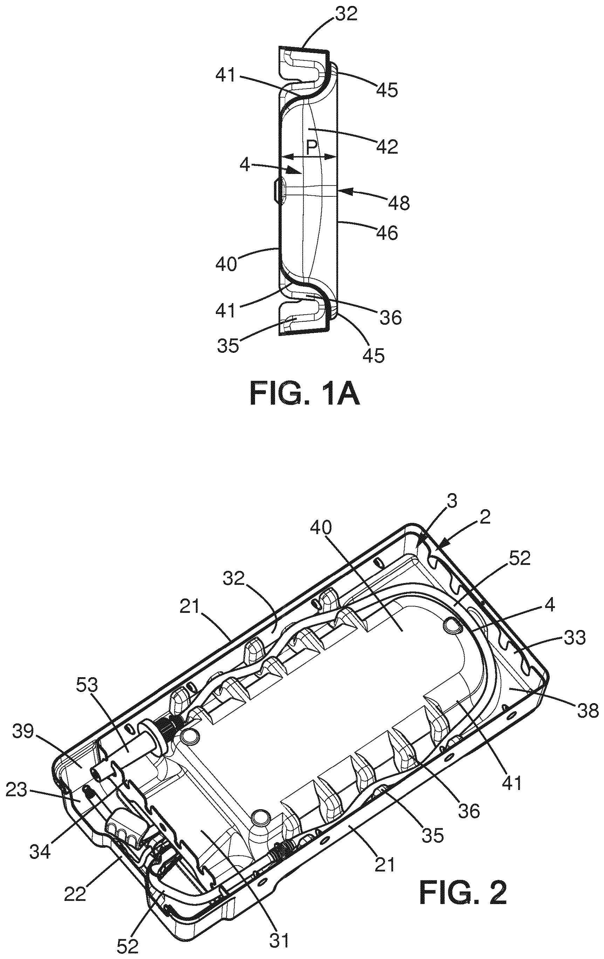

La figure 1 représente schématiquement une vue en éclaté d'un exemple de boîtier de protection sans poche selon un mode de réalisation de l'invention.

Le boîtier de protection comprend une coque inférieure 2, une coque supérieure 3 présentant un logement 4, un couvercle externe 1. La poche de liquide biopharmaceutique, non représentée sur la figure 1, est placée dans le fond 20 de la coque inférieure 2, recouverte par la coque supérieure 3 de manière à se retrouver dans le logement 4, la coque supérieure 3 étant insérée dans la coque inférieure 2 et étant recouverte par un couvercle externe 1 fermant le boîtier de protection. L'épaisseur e3 de la coque supérieure 3 est inférieure à l'épaisseur e2 de la coque inférieure 2. Ainsi, la coque supérieure 3 peut être insérée dans la coque inférieure 2 sans dépasser en hauteur de celle-ci.

La coque inférieure 2 comprend un fond 20 et quatre parois latérales 21, parmi lesquelles les parois latérales 21 de côté ainsi que les parois latérales 21 avant et arrière. Sur sa paroi latérale avant 21, se trouve un renfoncement 22 vers l'intérieur de la coque inférieure 2. Dans sa paroi latérale avant 21, au-dessus du renfoncement 22, la coque inférieure 2 présente une ouverture 23 par laquelle les tubes de la poche pourront sortir. Les parois latérales 21 de côté présentent des épaulements horizontaux 24 sur lesquels va pouvoir venir se poser la coque supérieure 3, et plus particulièrement le rebord 45 de la coque supérieure 3. La hauteur h entre les épaulements horizontaux 24 et le fond 20 de la coque inférieure 2 correspond à la distance entre l'ouverture du logement 4 et le fond de la coque inférieure 2. Les parois latérales 21 de côté présentent encore des épaulements horizontaux 25 sur lesquels va pouvoir venir se poser le couvercle externe 1, et plus particulièrement le rebord 11 du couvercle externe 1. Les parois latérales 21 de côté présentent encore des épaulements verticaux 26 contre lesquels va pouvoir venir en butée la coque supérieure 3, et plus particulièrement la paroi latérale 32 avant de la coque supérieure 3. Les parois latérales 21 de côté présentent également des trous 27 au travers desquels vont passer des rivets de fixation permettant de fixer ensemble la coque inférieure 2 et la coque supérieure 3.

La coque supérieure 3 comprend un logement 4 en son milieu. La coque supérieure 3 présente des parois latérales 32, deux parois latérales 32 de côté, une paroi latérale 32 avant et une paroi latérale 32 arrière. Entre le logement 4 et la paroi latérale 32 avant se trouve un espace 30 comprenant un passage 31 par lequel les tubes de la poche vont sortir du logement 4 puis déboucher hors du boîtier de protection en traversant l'ouverture 23 de sortie de la coque inférieure 2. La paroi latérale 32 arrière de la coque supérieure comprend une attache 33 sous la forme de plusieurs encoches 33 réalisées dans cette paroi latérale 32 arrière. La poignée du fond de poche est destinée à venir se fixer sur cette attache 33. La paroi latérale 32 avant de la coque supérieure 3 comprend également des chicanes 34 en forme d'encoches 34 entre lesquelles les tubes de poche peuvent passer et être maintenus en place. La paroi latérale 32 avant de la coque supérieure 3 va venir en butée contre les épaulements verticaux 26 de la coque inférieure 2. Les parois latérales 32 de côté comprennent des protubérances 35 coopérant avec les protubérances 36 des parois latérales 41 de côté du logement pour former des chicanes dans lesquelles les tubes de poche peuvent passer et être maintenus en place. Les parois latérales 32 de côté de la coque supérieure 3 présentent également des trous 37 au travers desquels vont passer des rivets de fixation permettant de fixer ensemble la coque inférieure 2 et la coque supérieure 3. Entre le logement 4 d'une part et les parois latérales 32 de la coque supérieure se trouve un espace 38 annulaire dans lequel vont pouvoir être disposés un ou plusieurs tubes de la poche. Cet espace 38 annulaire est donc un espace de rangement pour tout ou partie des tubes de la poche.

Le logement 4, destiné à accueillir la poche, présente un fond 40, ici en position de plafond, des parois latérales 41 de côté, une paroi latérale 43 avant d'où part le passage 31, une paroi latérale arrière 42 formant l'arrière du logement 4 contre lequel vient le fond de la poche comprenant la poignée de la poche. Entre les parois latérales 41 à 43 du logement 4 et les parois latérales 32 de la coque supérieure 3 se trouve un rebord 45 annulaire constituant le fond de l'espace annulaire 38. C'est ce rebord annulaire 45 de la coque supérieure 3 qui va reposer sur les épaulements horizontaux 24 de la coque inférieure 2. C'est sur la partie arrière 46 de ce rebord annulaire 45 que va s'enrouler la liaison entre la poignée et le fond de poche, lorsque la poignée de poche sera attachée sur l'attache 33. Le fond 40 du logement 4 comprend de petites protubérances circulaires 47 destinées à recevoir les cavités circulaires 13 du fond 10 de couvercle externe 1, lorsque ce couvercle externe 1 va reposer sur le fond 40 du logement 4 de la coque supérieure 3. Le fond 40 du logement 4 de la coque supérieure 3 se trouve au même niveau que le bord supérieur des parois latérales 32 de la coque supérieure 3.

Un couvercle 1 comprend un fond 10 et un rebord annulaire 11, ainsi qu'un renfoncement 12 en partie avant de ce rebord 11 et des cavités circulaires 13 destinées à s'emboîter avec les protubérances 47 de la coque supérieure 3, lorsque le couvercle externe 1 repose sur le fond 40 du logement 4 de la coque supérieure 3.

La figure 1A représente schématiquement une coupe AA de la coque supérieure représentée sur la figure 1.

Le logement 4 présente un fond 40 des parois latérales 41 de côté et une paroi latérale 42 arrière du logement 4. L'ouverture 48 du logement 4 est entourée par le rebord annulaire 45 dont la partie arrière 46 prolonge la paroi latérale 42 arrière du logement 4. Entre les parois latérales 32 de côté de la coque supérieure 3 et les parois latérales 41 de côté du logement 4 sont disposées des chicanes formées par la coopération entre d'une part les protubérances 35 des parois latérales 32 de côté de la coque supérieure 3 et d'autre part les protubérances 36 des parois latérales 41 de côté du logement 4. La profondeur p du logement 4 est la distance entre l'ouverture 48 (matérialisée par le rebord 45 annulaire dont sa partie arrière 46) et le fond 40 du logement 4.

La figure 2 représente schématiquement une vue assemblée en perspective d'un exemple de boîtier de protection intégrant une poche selon un mode de réalisation de l'invention.

La coque supérieure 3 a été entièrement insérée dans la coque inférieure 2. Les parois latérales 32 de la coque supérieure 3 ont glissé le long des parois latérales 21 de la coque inférieure 2, et se retrouvent pratiquement contre elles, une fois la coque supérieure 3 reposant sur les épaulements horizontaux 24 (non visibles ici) de la coque inférieure 2. La poche non visible sur la figure 2 se trouve dans le logement 4 entre la coque supérieure 3 et la coque inférieure 2. Les tubes 52 de la poche sortent par le passage 31, débouchent dans l'espace libre 39 entre les parois latérales avant des deux coques, avant de passer dans les chicanes 34 en forme d'encoches pour faire le tour du logement 4 dans l'espace libre 38 en passant dans les chicanes 35 et 36. Un connecteur 53 en bout de tube 52 est fixée dans la chicane 34 de la paroi latérale 32 avant de la coque supérieure 3. Un tube pourrait aussi sortir par l'ouverture de sortie 23.

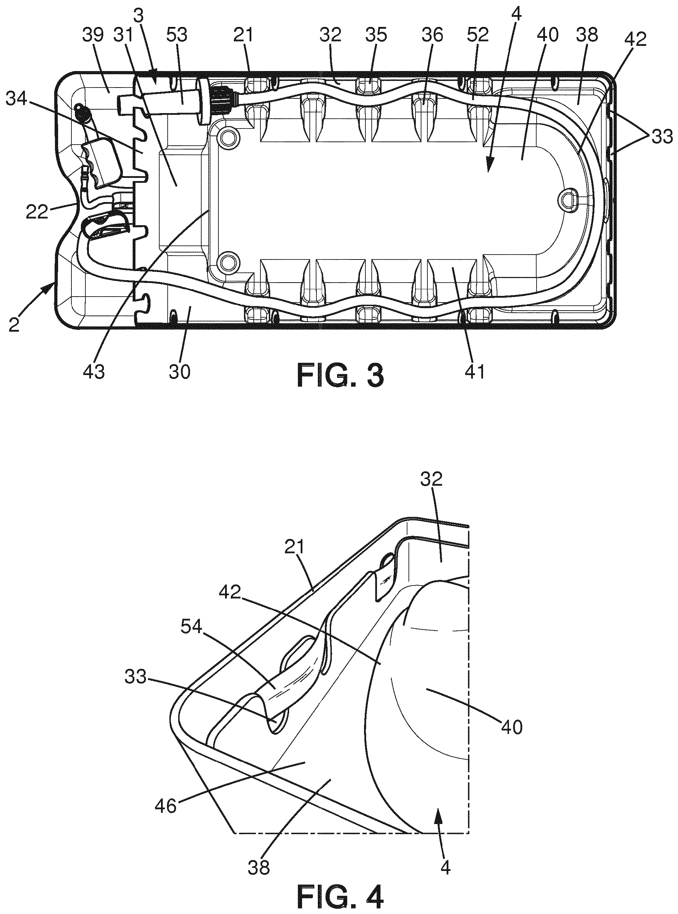

La figure 3 représente schématiquement une vue assemblée de dessus d'un exemple de boîtier de protection intégrant une poche selon un mode de réalisation de l'invention.

La coque supérieure 3 est complètement insérée dans la coque inférieure 2, les parois latérales 32 de la coque supérieure 3 étant pratiquement contre les parois latérales 21 de la coque inférieure 2. Le tube 52, rattaché à la poche contenue dans le logement 4, sorti par le passage 31, débouche dans l'espace libre 39 situé entre les parois latérales avant des deux coques, passe dans la chicane 34 en forme d'encoche, fait le tour du logement 4 dans l'espace libre 38 situé entre les parois 41 à 43 du logement 4 et les parois latérales 32 de la coque supérieure 3, en traversant les chicanes 35 et 36, pour venir se bloquer par son connecteur 53 dans la chicane 34.

La figure 4 représente schématiquement une vue de détail en perspective d'un exemple attache de la coque supérieure de boîtier de protection coopérant avec la poignée d'une poche selon un mode de réalisation de l'invention.

La poignée 54 prolongeant le fond de poche est attachée sur l'attache 33 en forme d'encoches de la paroi latérale 32 arrière de la coque supérieure 3. Cette poignée 54 passe au travers des encoches 33 en passant alternativement d'un côté puis de l'autre côté de la paroi latérale 32 arrière de la coque supérieure 3. La liaison située entre la poignée 54 et le fond de poche est enroulée par en dessous (donc non visible sur la figure 3) autour du rebord arrière 46 de la coque supérieure 3, ce rebord arrière 46 joignant la paroi latérale 32 arrière de la coque supérieure 3 à la paroi latérale 42 arrière du logement 4. Sur la figure 3, il n'y a pas de tube de poche dans l'espace libre 38.

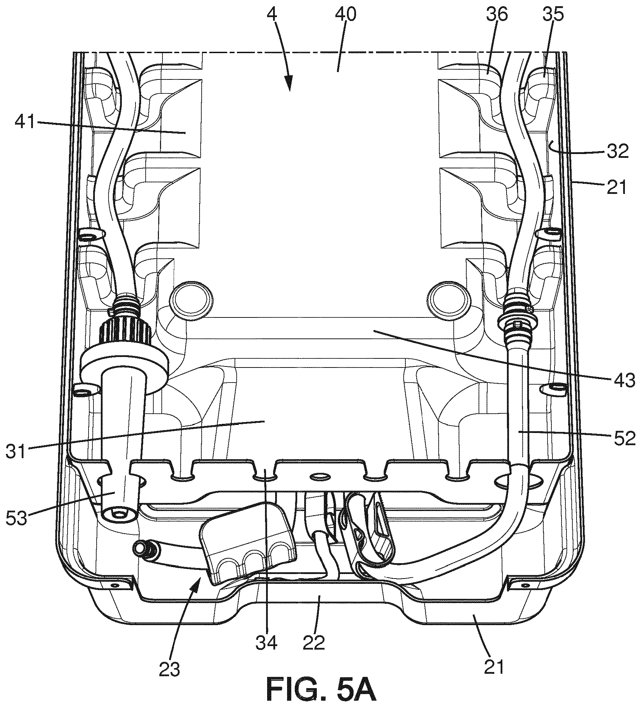

La figure 5A représente schématiquement une vue partielle en perspective d'un exemple d'extrémité longitudinale de la coque supérieure de boîtier de protection selon un mode de réalisation de l'invention.

La coque supérieure 3 est complètement insérée dans la coque inférieure 2, les parois latérales 32 de la coque supérieure 3 étant pratiquement contre les parois latérales 21 de la coque inférieure 2. Le tube 52, rattaché à la poche contenue dans le logement 4, sorti par le passage 31, débouche dans l'espace libre 39 situé entre les parois latérales avant des deux coques, passe dans la chicane 34 en forme d'encoche, fait le tour du logement 4 dans l'espace libre 38 situé entre les parois 41 du logement 4 et les parois latérales 32 de la coque supérieure 3, en traversant les chicanes 35 et 36, pour venir se bloquer par son connecteur 53 dans la chicane 34.

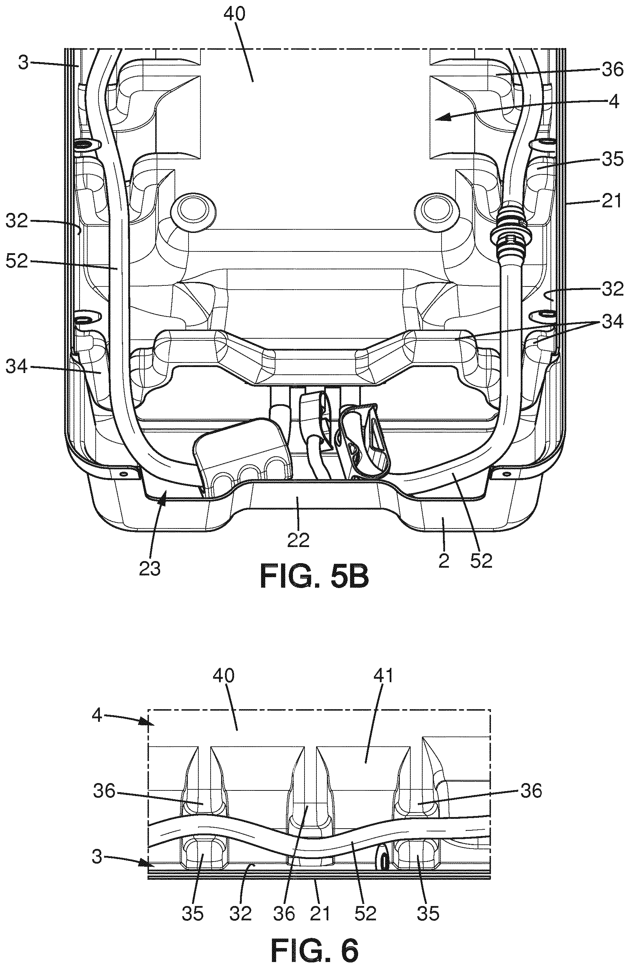

La figure 5B représente schématiquement une vue partielle en perspective d'un exemple alternatif d'extrémité longitudinale de la coque supérieure de boîtier de protection selon un mode de réalisation de l'invention.

La figure 5B est similaire à la figure 5A. Seule la forme de la chicane 34 change. Ici, au lieu d'être une ou plusieurs simples encoches dans une paroi latérale avant plane de la coque supérieure 3, cette chicane 34 est constituée d'une succession de tronçons tubulaires et de coudes, présentant l'avantage d'être moins agressifs contre les parois des tubes 52 lorsque ceux-ci sont coincés dans ces chicanes 34, évitant ainsi d'endommager la couche extérieure de ces tubes 52.

La figure 6 représente schématiquement une vue de détail de dessus d'un exemple de chicanes de la coque supérieure de boîtier de protection selon un mode de réalisation de l'invention.

Le détail des chicanes formées par les successions de protubérances 35 et 36 entre d'une part les parois latérales 41 de côté du logement 4 et d'autre part les parois latérales 32 de côté de la coque supérieure 3 est montré. Une protubérance 36 longue de la paroi latérale 41 de côté du logement 4 est encadrée par deux protubérances 36 plus courtes de la paroi latérale 41 de côté du logement 4, tandis qu'en vis-à-vis, une absence de protubérance 35 de la paroi latérale 32 de côté de la coque supérieure 3 est encadrée par deux protubérances 35 de la paroi latérale 32 de côté de la coque supérieure 3. Là encore, la paroi latérale 32 de côté de la coque supérieure 3 est pratiquement située contre la paroi latérale 21 de côté de la coque inférieure 2.

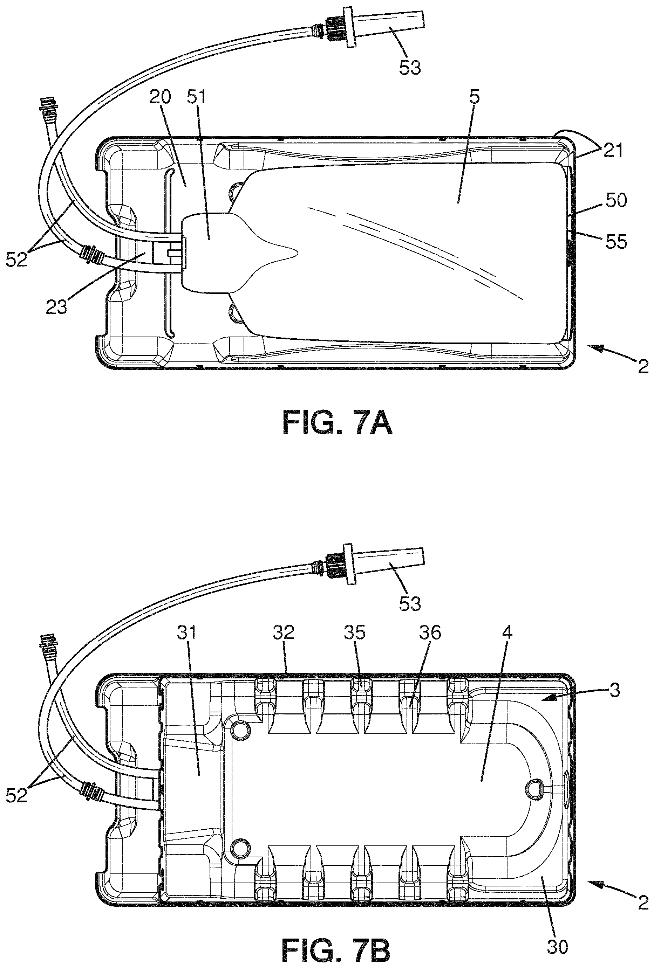

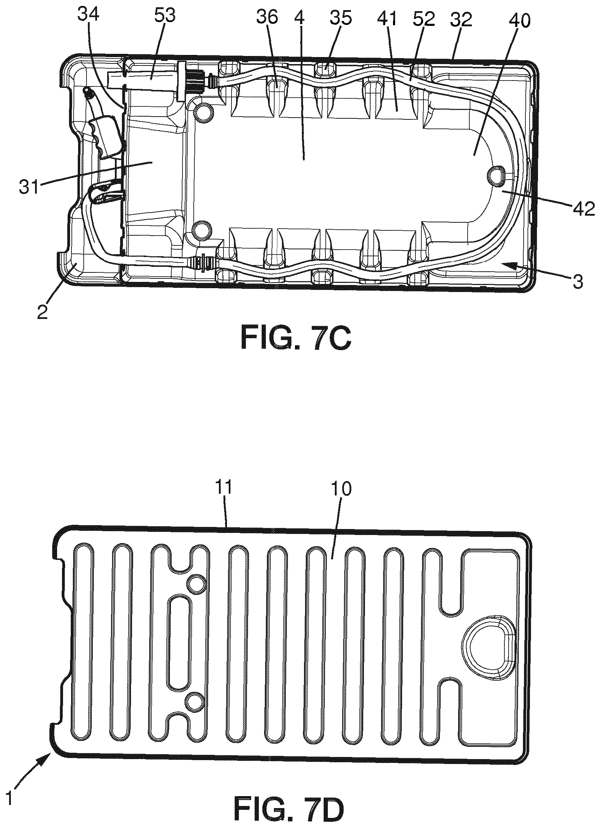

Les figures 7A, 7B, 7C et 7D, représentent schématiquement en vue de dessus quatre étapes successives d'un exemple de procédé d'assemblage d'un ensemble de protection d'une poche selon un mode de réalisation de l'invention.

Sur la figure 7A, la poche 50 est disposée dans le fond 20 de la coque inférieure 2. D'une ouverture supérieure 51 de poche 50 partent des tubes 52 terminés par des connecteurs 53, ces tubes 52 sortant par l'ouverture de sortie 23 de la coque inférieure 2. Le fond 55 de la poche 50 est du côté de la paroi latérale 21 arrière de la coque inférieure 2.

Sur la figure 7B, la coque supérieure 3 recouvre la poche 50 qui n'est donc plus visible. Seuls les tubes 52 sortant de la coque supérieure 3 par le passage 31 sont encore visibles. L'espace libre 38 annulaire fait le tour du logement 4 à l'intérieur des parois latérales 32 de la coque supérieure 3. Cet espace libre 38 annulaire, doté des chicanes 35 et 36, est vide, car il ne contient pas encore les tubes 52.

Sur la figure 7C, les tubes 52, sortis du passage 31, ayant débouchés entre les parois latérales avant des deux coques, traversent les chicanes 34, font le tour du logement 4 à l'intérieur des parois latérales 32 de la coque supérieure 3 en passant par les chicanes 35 et 36, avant que le connecteur 53 de l'un de ces tubes 52 soit bloqué dans la chicane 34, un autre connecteur 53 se trouvant quant à lui entre la paroi latérale 42 arrière du logement 4 et la paroi latérale 32 arrière de la coque supérieure 3.

Sur la figure 7D, le couvercle externe 1 présentant un fond 10 et un rebord annulaire 11, peut être utilisé ensuite pour recouvrir la coque supérieure 3 et refermer ainsi la coque inférieure 2, le boîtier de protection étant alors complètement fermé.

Selon un autre procédé d'assemblage de la poche dans son boîtier de protection, qui est plus court et plus facile, donc plus ergonomique que celui présenté en liaison avec les figures 7A à 7D, pour réaliser facilement l'assemblage du boîtier de protection, même avec la poche vide à l'intérieur de ce boîtier de protection, il est prévu un procédé d'assemblage d'un ensemble de protection d'une poche de liquide biopharmaceutique selon l'invention, comprenant successivement les étapes suivantes. D'abord, un opérateur accroche, par une première de ses mains, la poche par sa poignée à la coque supérieure, cette coque supérieure étant en position verticale. Ensuite, cette coque supérieure restant en position verticale, cet opérateur positionne et maintient, par une deuxième de ses mains, l'extrémité de la poche opposée à sa poignée contre la coque supérieure de manière à ce que la poche soit dans son logement de coque supérieure. Puis, cet opérateur place la coque supérieure contenant la poche dans la coque inférieure placée en position horizontale. Enfin, cet opérateur peut fermer la coque inférieure en la recouvrant d'un couvercle externe et/ou bien cet opérateur peut empiler le boîtier de protection rempli par la poche sur un autre boîtier de protection également rempli par sa poche.

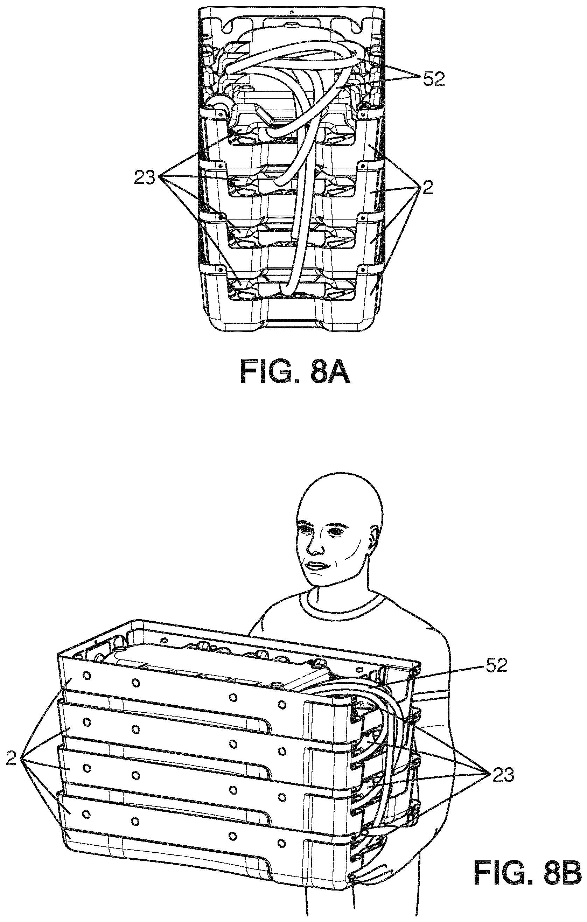

Les figures 8A et 8B représentent schématiquement en perspective des exemples d'empilement les uns sur les autres de plusieurs boîtiers de protection intégrant des poches selon un mode de réalisation de l'invention.

Quatre boîtiers de protection sont empilés les uns sur les autres. Ils contiennent chacun une poche dont le ou les tubes 52 sortent respectivement par les ouvertures de sortie 23 de leurs coques inférieures 2.

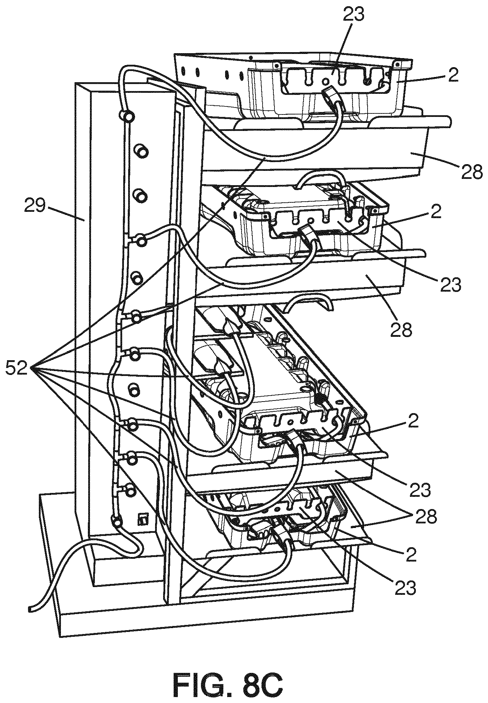

La figure 8C représente schématiquement en perspective un exemple de groupe de plusieurs boîtiers de protection intégrant des poches selon un mode de réalisation de l'invention.

Quatre boîtiers de protection sont respectivement disposés sur des étagères 28 d'un meuble 29. Ils contiennent chacun une poche dont le ou les tubes 52 sortent respectivement par les ouvertures de sortie 23 de leurs coques inférieures 2.

## Revendications

1. Boitier de protection d'une poche (50) de liquide biopharmaceutique, comprenant :
- une coque inférieure (2) comprenant un fond (20) et des parois latérales (21),
- une coque supérieure (3) qui comprend un logement (4) destiné à recevoir la poche (50), de sorte que, lorsque la poche (50) est placée dans le fond (20) de la coque inférieure (2), la poche (50) est recouverte par la coque supérieure (3) de manière à se retrouver dans le logement (4) entre la coque supérieure (3) et la coque inférieure (2),
∘ le logement (4) comprenant un fond (40), et des parois latérales (41 à 43) s'étendant sensiblement perpendiculairement au fond (40) du logement, et la coque supérieure (3) présentant également des parois latérales (32) externes entourant les parois latérales (41 à 43) du logement (4) et s'étendant sensiblement parallèlement aux parois latérales (41 à 43) du logement (4), de sorte que, entre le logement (4) d'une part et les parois latérales (32) de la coque supérieure (3) se trouve un espace (38) annulaire de rangement dans lequel vont pouvoir être disposés un ou plusieurs tubes de la poche (50) ;
les parois latérales du logement comprenant des parois latérales de côté (41), une paroi latérale avant d'où sort un passage (31) et une paroi latérale arrière (42) formant l'arrière du logement ;
les parois latérales (32) de la coque supérieure comprenant deux parois latérales de côté, une paroi latérale avant, et une paroi latérale arrière ;
chaque paroi latérale (32) de côté de la coque supérieure comprenant des protubérances (35) coopérant avec des protubérances (36) d'une paroi latérale (41) de côté du logement pour former des chicanes dans lesquelles les tubes de poche peuvent passer et être maintenus en place,
- la coque supérieure étant insérable dans la coque inférieure (2),
∘ de sorte que l'ouverture (48) du logement (4) soit au voisinage et en regard du fond (20) de la coque inférieure (2),
∘ et de sorte que la coque supérieure (3) soit maintenue en place latéralement entre les parois latérales (21) de la coque inférieure (2),
- la coque supérieure comprenant une attache (33) qui est située hors du logement (4) et qui est disposée de manière à ce qu'une poignée (54) du fond (55) de la poche (50) puisse s'accrocher à l'attache (33), l'attache (33) étant formée par plusieurs encoches formées dans l'une des parois latérales (32) de la coque supérieure (3).

2. Boitier de protection selon la revendication 1, **caractérisé en ce que** la coque supérieure (3) est insérable dans la coque inférieure (2) aussi de sorte qu'un pourtour extérieur de la coque supérieure (3) soit guidé par les parois latérales (21) de la coque inférieure (2).

3. Boitier de protection selon l'une quelconque des revendications précédentes, **caractérisé en ce que** l'épaisseur (e3) de la coque supérieure (3) est inférieure à l'épaisseur (e2) de la coque inférieure (2)

4. Boitier de protection selon la revendication 1, **caractérisé en ce que** la coque supérieure (3) comprend également, au moins au niveau d'une extrémité (42) du logement (4) destinée à recevoir le fond (55) de la poche (50), un rebord (45) entourant l'ouverture (48) du logement (4), s'étendant préférentiellement sensiblement dans le plan de l'ouverture (48) du logement (4), et **en ce qu'**une partie (46) de rebord (45) de coque supérieure (3), située entre l'attache (33) et ladite extrémité (42) du logement (4), est disposée de manière à ce que, lorsque la poignée (54) du fond (55) de la poche (50) s'accroche à l'attache (33), la liaison entre poignée (54) et fond (55) de poche (50) s'enroule autour de ladite partie (46) de rebord (45).

5. Boitier de protection selon l'une quelconque des revendications précédentes, **caractérisé en ce que** le logement (4) est plus court que la coque supérieure (3) de manière à dégager un espace libre (39) permettant la sortie du ou des tubes (52) de la poche (50).

6. Boitier de protection selon l'une quelconque des revendications précédentes, **caractérisé en ce que** la paroi latérale (21) de la coque inférieure (2) située du côté de la sortie de tube ou tubes (52) de la poche (50) comprend une ouverture (23) de sortie du ou des tubes (52) latéralement hors de la coque inférieure (2), et **en ce que** ladite paroi latérale (21) de la coque inférieure (2) comprend un renfoncement (22) disposé vers l'intérieur de la coque inférieure (2) et situé au-dessus ou en dessous de ladite ouverture (23) de sortie.

7. Boitier de protection selon l'une quelconque des revendications précédentes, **caractérisé en ce qu'**il comprend également un couvercle externe (1) recouvrant la coque supérieure (3) et fermant la coque inférieure (2).

8. Boitier de protection selon l'une quelconque des revendications précédentes, **caractérisé en ce que** la coque supérieure (3) et la coque inférieure (2) sont en plastique, et de préférence **en ce que** le plastique est du polyethylene téréphthalate glycol.

9. Boitier de protection selon l'une quelconque des revendications 7 et 8, **caractérisé en ce que** les parois latérales (21) de la coque inférieure (2) comprennent un ou plusieurs épaulements (25), de préférence parallèle au plan moyen du fond (20) de la coque inférieure (2), sur lesquels le couvercle (1) vient en appui.

10. Boitier de protection selon l'une quelconque des revendications précédentes, **caractérisé en ce que** les parois latérales (21) de la coque inférieure (2) comprennent un ou plusieurs épaulements (24), de préférence parallèle au plan moyen du fond (20) de la coque inférieure (2), sur lesquels la coque supérieure (3) vient en appui.

11. Boitier de protection selon l'une quelconque des revendications précédentes, **caractérisé en ce que** les parois latérales (21) de la coque inférieure (2) comprennent un ou plusieurs épaulements (26), de préférence orthogonaux au plan moyen du fond (20) de la coque inférieure (2), contre lesquels la coque supérieure (3) vient en butée longitudinale lorsqu'elle est insérée dans la coque inférieure (2).

12. Boitier de protection selon la revendication 1, **caractérisé en ce que** la distance (h) entre l'ouverture (48) du logement (4) et le fond (20) de la coque inférieure (2) est supérieure ou égale à la moitié, de préférence aux trois quarts de la profondeur (p) du logement (4)..

13. Ensemble de protection d'une poche de liquide biopharmaceutique comprenant :
- un boitier de protection selon l'une quelconque des revendications précédentes,
- une poche (50) de liquide biopharmaceutique placée dans ledit boîtier de protection ou une poche (50) vide destinée à recevoir du liquide biopharmaceutique placée dans ledit boîtier de protection,
la poche (50) de liquide biopharmaceutique étant plate et allongée et présente au niveau de son fond (55) de poche (50) une poignée (54) reliée audit fond (55) par une liaison de forme plane, et au niveau du côté opposé une ou plusieurs connexions pour tube (52) ; la poignée (54) du fond de poche étant accrochée à l'attache (33).

14. Procédé d'assemblage d'un ensemble de protection d'une poche de liquide biopharmaceutique selon la revendication 13, **caractérisé en ce que** :
- un opérateur accroche, par une première de ses mains, la poche (50) par sa poignée (54) à la coque supérieure (3), cette coque supérieure (3) étant en position verticale,
- cette coque supérieure (3) restant en position verticale, cet opérateur positionne et maintient, par une deuxième de ses mains, l'extrémité (51) de la poche (50) opposée à sa poignée (54) contre la coque supérieure (3) de manière à ce que la poche (50) soit dans son logement (4) de coque supérieure (3),
- cet opérateur place la coque supérieure (3) contenant la poche (50) dans la coque inférieure (2) placée en position horizontale.

## Patentansprüche

1. Schutzgehäuse für einen biopharmazeutischen Flüssigkeitsbeutel (50), umfassend:
• eine untere Schale (2), die einen Boden (20) und Seitenwände (21) umfasst,
• eine obere Schale (3), die eine Aufnahme (4) umfasst, die dazu bestimmt ist, den Beutel (50) aufzunehmen, und die in die untere Schale (2) einsetzbar ist, so dass, wenn der Beutel (50) in den Boden (20) der unteren Schale (2) gelegt wird, der Beutel (50) von der oberen Schale (3) bedeckt wird, um sich in der Aufnahme (4) zwischen der oberen Schale (3) und der unteren Schale (2) wiederzufinden,
∘ wobei die Aufnahme (4) einen Boden (40) und Seitenwände (41 bis 43) umfasst, die sich im Wesentlichen senkrecht zum Boden (40) der Aufnahme erstrecken, und wobei die obere Schale (3) auch äußere Seitenwände (32) aufweist, die die Seitenwände (41 bis 43) der Aufnahme (4) umgeben und sich im Wesentlichen parallel zu den Seitenwänden (41 bis 43) der Aufnahme (4) erstrecken, so dass sich zwischen der Aufnahme (4) einerseits und den Seitenwänden (32) der oberen Schale (3) andererseits ein ringförmiger Aufbewahrungsraum (38) befindet, in dem ein oder mehrere Schläuche des Beutels (50) angeordnet werden können; wobei die Seitenwände der Aufnahme seitliche Seitenwände (41), eine vordere Seitenwand, aus der ein Durchgang (31) austritt, und eine hintere Seitenwand (42), die die Rückseite der Aufnahme bildet, umfassen;
wobei die Seitenwände (32) der oberen Schale zwei seitliche Seitenwände, eine vordere Seitenwand und eine hintere Seitenwand umfassen;
wobei jede seitliche Seitenwand (32) der oberen Schale Vorsprünge (35) umfasst, die mit Vorsprüngen (36) einer seitlichen Seitenwand (41) der Aufnahme zusammenwirken, um Leitbleche zu bilden, in denen die Beutelschläuche durchgeführt und in Position gehalten werden können,
• wobei die obere Schale in die untere Schale (2) einsetzbar ist,
∘ so dass die Öffnung (48) der Aufnahme (4) in der Nähe des Bodens (20) der unteren Schale (2) und diesem gegenüberliegend ist,
∘ und so dass die obere Schale (3) seitlich zwischen den Seitenwänden (21) der unteren Schale (2) in Position gehalten wird,
• wobei die obere Schale eine Befestigung (33) umfasst, die außerhalb der Aufnahme (4) angeordnet ist und so angeordnet ist, dass ein Griff (54) des Bodens (55) des Beutels (50) sich an der Befestigung (33) einhaken kann, wobei die Befestigung (33) durch mehrere Kerben gebildet ist, die in einer der Seitenwände (32) der oberen Schale (3) geformt sind.

2. Schutzgehäuse nach Anspruch 1, **dadurch gekennzeichnet, dass** die obere Schale (3) auch so in die untere Schale (2) einsetzbar ist, dass ein äußerer Umfang der oberen Schale (3) durch die Seitenwände (21) der unteren Schale (2) geführt wird.

3. Schutzgehäuse nach einem der vorhergehenden Ansprüche, **dadurch gekennzeichnet, dass** die Dicke (e3) der oberen Schale (3) geringer ist als die Dicke (e2) der unteren Schale (2).

4. Schutzgehäuse nach Anspruch 1, **dadurch gekennzeichnet, dass** die obere Schale (3) auch, mindestens auf Höhe eines Endes (42) der Aufnahme (4), das dazu bestimmt ist, den Boden (55) des Beutels (50) aufzunehmen, einen Rand (45) umfasst, der die Öffnung (48) der Aufnahme (4) umgibt und sich vorzugsweise im Wesentlichen in der Ebene der Öffnung (48) der Aufnahme (4) erstreckt, und dass ein Teil (46) des Randes (45) der oberen Schale (3), der zwischen der Befestigung (33) und dem genannten Ende (42) der Aufnahme (4) angeordnet ist, so angeordnet ist, dass, wenn der Griff (54) des Bodens (55) des Beutels (50) sich an der Befestigung (33) einhakt, die Verbindung zwischen dem Griff (54) und dem Boden (55) des Beutels (50) sich um den genannten Teil (46) des Randes (45) wickelt.

5. Schutzgehäuse nach einem der vorhergehenden Ansprüche, **dadurch gekennzeichnet, dass** die Aufnahme (4) kürzer ist als die obere Schale (3), um einen freien Raum (39) freizugeben, der den Austritt des Schlauchs oder der Schläuche (52) des Beutels (50) ermöglicht.

6. Schutzgehäuse nach einem der vorhergehenden Ansprüche, **dadurch gekennzeichnet, dass** die Seitenwand (21) der unteren Schale (2), die sich auf der Seite des Austritts des Schlauchs oder der Schläuche (52) des Beutels (50) befindet, eine Austrittsöffnung (23) für den Austritt des Schlauchs oder der Schläuche (52) seitlich aus der unteren Schale (2) umfasst, und dass die genannte Seitenwand (21) der unteren Schale (2) eine Vertiefung (22) umfasst, die zum Inneren der unteren Schale (2) hin angeordnet ist und sich oberhalb oder unterhalb der genannten Austrittsöffnung (23) befindet.

7. Schutzgehäuse nach einem der vorhergehenden Ansprüche, **dadurch gekennzeichnet, dass** es auch einen äußeren Deckel (1) umfasst, der die obere Schale (3) abdeckt und die untere Schale (2) verschließt.

8. Schutzgehäuse nach einem der vorhergehenden Ansprüche, **dadurch gekennzeichnet, dass** die obere Schale (3) und die untere Schale (2) aus Kunststoff sind, und vorzugsweise dass der Kunststoff Polyethylenterephthalatglykol ist.

9. Schutzgehäuse nach einem der Ansprüche 7 und 8, **dadurch gekennzeichnet, dass** die Seitenwände (21) der unteren Schale (2) eine oder mehrere Schultern (25) umfassen, vorzugsweise parallel zur mittleren Ebene des Bodens (20) der unteren Schale (2), auf denen der Deckel (1) aufliegt.

10. Schutzgehäuse nach einem der vorhergehenden Ansprüche, **dadurch gekennzeichnet, dass** die Seitenwände (21) der unteren Schale (2) eine oder mehrere Schultern (24) umfassen, vorzugsweise parallel zur mittleren Ebene des Bodens (20) der unteren Schale (2), auf denen die obere Schale (3) aufliegt.

11. Schutzgehäuse nach einem der vorhergehenden Ansprüche, **dadurch gekennzeichnet, dass** die Seitenwände (21) der unteren Schale (2) eine oder mehrere Schultern (26) umfassen, vorzugsweise orthogonal zur mittleren Ebene des Bodens (20) der unteren Schale (2), gegen die die obere Schale (3) längs in Anschlag kommt, wenn sie in die untere Schale (2) eingesetzt wird.

12. Schutzgehäuse nach Anspruch 1, **dadurch gekennzeichnet, dass** der Abstand (h) zwischen der Öffnung (48) der Aufnahme (4) und dem Boden (20) der unteren Schale (2) größer oder gleich der Hälfte, vorzugsweise drei Vierteln, der Tiefe (p) der Aufnahme (4) ist.

13. Schutzanordnung für einen biopharmazeutischen Flüssigkeitsbeutel, umfassend:
• ein Schutzgehäuse nach einem der vorhergehenden Ansprüche,
• einen biopharmazeutischen Flüssigkeitsbeutel (50), der in dem genannten Schutzgehäuse platziert ist, oder einen leeren Beutel (50), der dazu bestimmt ist, die biopharmazeutische Flüssigkeit aufzunehmen, der in dem genannten Schutzgehäuse platziert ist, wobei der biopharmazeutische Flüssigkeitsbeutel (50) flach und länglich ist und auf Höhe seines Beutelbodens (55) einen Griff (54) aufweist, der mit dem genannten Boden (55) durch eine flachförmige Verbindung verbunden ist, und auf Höhe der gegenüberliegenden Seite eine oder mehrere Anschlüsse für Schlauch (52); wobei der Griff (54) des Beutelbodens an der Befestigung (33) eingehakt ist.

14. Montageverfahren für eine Schutzanordnung für einen biopharmazeutischen Flüssigkeitsbeutel nach Anspruch 13, **dadurch gekennzeichnet, dass**:
• ein Bediener mit einer ersten seiner Hände den Beutel (50) an seinem Griff (54) an der oberen Schale (3) einhakt, wobei diese obere Schale (3) in vertikaler Position ist,
• wobei diese obere Schale (3) in vertikaler Position bleibt, dieser Bediener mit einer zweiten seiner Hände das Ende (51) des Beutels (50), das seinem Griff (54) gegenüberliegt, gegen die obere Schale (3) positioniert und hält, so dass der Beutel (50) in seiner Aufnahme (4) der oberen Schale (3) ist,
• dieser Bediener die obere Schale (3), die den Beutel (50) enthält, in die untere Schale (2) legt, die in horizontaler Position platziert ist.

## Claims

1. Protective casing for a biopharmaceutical liquid pouch (50), comprising:
• a lower shell (2) comprising a bottom (20) and lateral walls (21),
• an upper shell (3) which comprises a housing (4) intended to receive the pouch (50), and which is insertable into the lower shell (2), so that, when the pouch (50) is placed in the bottom (20) of the lower shell (2), the pouch (50) is covered by the upper shell (3) so as to end up in the housing (4) between the upper shell (3) and the lower shell (2),
∘ the housing (4) comprising a bottom (40), and lateral walls (41 to 43) extending substantially perpendicularly to the bottom (40) of the housing, and the upper shell (3) also presenting external lateral walls (32) surrounding the lateral walls (41 to 43) of the housing (4) and extending substantially parallel to the lateral walls (41 to 43) of the housing (4), so that, between the housing (4) on one hand and the lateral walls (32) of the upper shell (3) on the other hand, there is an annular storage space (38) in which one or more tubes of the pouch (50) can be arranged;
the lateral walls of the housing comprising side lateral walls (41), a front lateral wall from which a passage (31) exits and a rear lateral wall (42) forming the rear of the housing;
the lateral walls (32) of the upper shell comprising two side lateral walls, a front lateral wall, and a rear lateral wall;
each side lateral wall (32) of the upper shell comprising protuberances (35) cooperating with protuberances (36) of a side lateral wall (41) of the housing to form baffles in which the pouch tubes can pass and be maintained in place,
• the upper shell being insertable into the lower shell (2),
∘ so that the opening (48) of the housing (4) is in the vicinity of and facing the bottom (20) of the lower shell (2),
∘ and so that the upper shell (3) is maintained in place laterally between the lateral walls (21) of the lower shell (2),
• the upper shell comprising a fastener (33) which is located outside the housing (4) and which is arranged so that a handle (54) of the bottom (55) of the pouch (50) can hook onto the fastener (33), the fastener (33) being formed by several notches formed in one of the lateral walls (32) of the upper shell (3).

2. Protective casing according to claim 1, **characterized in that** the upper shell (3) is insertable into the lower shell (2) also so that an outer periphery of the upper shell (3) is guided by the lateral walls (21) of the lower shell (2).

3. Protective casing according to any one of the preceding claims, **characterized in that** the thickness (e3) of the upper shell (3) is less than the thickness (e2) of the lower shell (2).

4. Protective casing according to claim 1, **characterized in that** the upper shell (3) also comprises, at least at the level of one end (42) of the housing (4) intended to receive the bottom (55) of the pouch (50), a rim (45) surrounding the opening (48) of the housing (4), extending preferentially substantially in the plane of the opening (48) of the housing (4), and **in that** a portion (46) of rim (45) of the upper shell (3), located between the fastener (33) and said end (42) of the housing (4), is arranged so that, when the handle (54) of the bottom (55) of the pouch (50) hooks onto the fastener (33), the connection between the handle (54) and the bottom (55) of the pouch (50) wraps around said portion (46) of rim (45).

5. Protective casing according to any one of the preceding claims, **characterized in that** the housing (4) is shorter than the upper shell (3) so as to clear a free space (39) allowing the exit of the tube or tubes (52) of the pouch (50).

6. Protective casing according to any one of the preceding claims, **characterized in that** the lateral wall (21) of the lower shell (2) located on the side of the tube or tubes (52) exit of the pouch (50) comprises an exit opening (23) for the tube or tubes (52) to exit laterally out of the lower shell (2), and **in that** said lateral wall (21) of the lower shell (2) comprises a recess (22) arranged toward the interior of the lower shell (2) and located above or below said exit opening (23).

7. Protective casing according to any one of the preceding claims, **characterized in that** it also comprises an external cover (1) covering the upper shell (3) and closing the lower shell (2).

8. Protective casing according to any one of the preceding claims, **characterized in that** the upper shell (3) and the lower shell (2) are made of plastic, and preferably **in that** the plastic is polyethylene terephthalate glycol.

9. Protective casing according to any one of claims 7 and 8, **characterized in that** the lateral walls (21) of the lower shell (2) comprise one or more shoulders (25), preferably parallel to the mean plane of the bottom (20) of the lower shell (2), on which the cover (1) rests.

10. Protective casing according to any one of the preceding claims, **characterized in that** the lateral walls (21) of the lower shell (2) comprise one or more shoulders (24), preferably parallel to the mean plane of the bottom (20) of the lower shell (2), on which the upper shell (3) rests.

11. Protective casing according to any one of the preceding claims, **characterized in that** the lateral walls (21) of the lower shell (2) comprise one or more shoulders (26), preferably orthogonal to the mean plane of the bottom (20) of the lower shell (2), against which the upper shell (3) comes into longitudinal abutment when it is inserted into the lower shell (2).

12. Protective casing according to claim 1, **characterized in that** the distance (h) between the opening (48) of the housing (4) and the bottom (20) of the lower shell (2) is greater than or equal to half, preferably three-quarters, of the depth (p) of the housing (4).

13. Protective assembly for a biopharmaceutical liquid pouch comprising:
• a protective casing according to any one of the preceding claims,
• a biopharmaceutical liquid pouch (50) placed in said protective casing or an empty pouch (50) intended to receive the biopharmaceutical liquid placed in said protective casing, the biopharmaceutical liquid pouch (50) being flat and elongated and presenting at the level of its pouch bottom (55) a handle (54) connected to said bottom (55) by a flat-shaped connection, and at the level of the opposite side one or more connections for tube (52); the handle (54) of the pouch bottom being hooked to the fastener (33).

14. Assembly process for a protective assembly for a biopharmaceutical liquid pouch according to claim 13, **characterized in that**:
• an operator hooks, by a first of his hands, the pouch (50) by its handle (54) to the upper shell (3), this upper shell (3) being in a vertical position,
• this upper shell (3) remaining in vertical position, this operator positions and maintains, by a second of his hands, the end (51) of the pouch (50) opposite to its handle (54) against the upper shell (3) so that the pouch (50) is in its housing (4) of the upper shell (3),
• this operator places the upper shell (3) containing the pouch (50) into the lower shell (2) placed in horizontal position.
